(19) Europäisches Patentamt
European Patent Office
Office européen des brevets

(11) Publication number: **0 199 878 B1**

(12) # EUROPEAN PATENT SPECIFICATION

(45) Date of publication of patent specification: **25.09.91**

(51) Int. Cl.5: **C01B 3/48**, H01M 8/06

(21) Application number: **85309402.7**

(22) Date of filing: **23.12.85**

(54) **Apparatus for hydrocarbon fuel processing.**

(30) Priority: **25.04.85 US 727302**

(43) Date of publication of application:
**05.11.86 Bulletin 86/45**

(45) Publication of the grant of the patent:
**25.09.91 Bulletin 91/39**

(84) Designated Contracting States:
**DE FR GB IT NL SE**

(56) References cited:
**US-A- 3 450 514**
**US-A- 3 541 729**
**US-A- 3 909 299**

**PATENT ABSTRACTS OF JAPAN, vol. 9, no. 82 (C-275)[1805], 11th April 1985; & JP-A-59 217 605 (BABCOCK HITACHI K.K.) 07-12-1984**

**PATENT ABSTRACTS OF JAPAN, vol. 9, no. 65 (E-304)[1788], 26th March 1985; & JP-A-59 203 372 (HITACHI SEISAKUSHO K.K.) 17-11-1984**

(73) Proprietor: **WESTINGHOUSE ELECTRIC CORPORATION**
**Westinghouse Building Gateway Center**
**Pittsburgh Pennsylvania 15235(US)**

(72) Inventor: **Murray, Alexander Peter**
**3943 Hickory Hill Road**
**Murrysville Pennsylvania(US)**
Inventor: **Young, William Elwin**
**2307 Forest Drive**
**Pittsburgh Pennsylvania(US)**
Inventor: **Christner, Larry Gene**
**15 Nutmeg Lane**
**Sandy Hook Connecticut(US)**
Inventor: **Chi, Chang Vum**
**118 Pocono Road**
**Brookfield Connecticut(US)**

(74) Representative: **van Berlyn, Ronald Gilbert**
**23, Centre Heights**
**London, NW3 6JG(GB)**

**EP 0 199 878 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to apparatus for hydrocarbon fuel processing, and more particularly to a double counter-current flow steam reformer with an integral water/gas shift converter useful to convert hydrocarbon feed mixtures into a hydrogen bearing fuel for use in fuel cell based systems, particularly those employing a phosphoric acid electrolyte.

Reformers are used throughout process industries to produce a process gas such as a hydrogen rich stream by reacting steam with a hydrocarbon in the presence of a catalyst at high temperatures, typically above 538°C (1000°F). The reformation reaction is highly endothermic. The hydrogen rich stream is usually consumed by any of several processes, for example, ammonia synthesis, de-aromatization, and hydro-desulfurization and the gas is suitable for use as a fuel in fuel cell based systems employing a solid oxide electrolyte.

However, the high levels of carbon monoxide in this reformed gaseous mixture, typically on the order of 9-10%, make this process gas unacceptable for use as a fuel in fuel cell systems employing a phosphorio acid electrolyte without further conditioning. For such applications, a water/gas shift reactor is used to convert the carbon monoxide in the reformed gas mixture and water, which is introduced as steam, into carbon dioxide and more hydrogen. Unlike carbon monoxide, the carbon dioxide produced in the shift reactor does not adversely affect fuel cells employing a phosphoric acid electrolyte. This shift reaction, which is slightly exothermic, is favored at lower temperatures than the reaction in the reformer. Therefore, the reformed gas must be cooled from its reformer exit temperature of about 1200-1500°F (649-816°C) to under 1100°F (593°C) before the shift reaction is favored and further reduction of the temperature to 700-900°F (371-482°C) is preferred.

In fuel cell systems as well as in the process industries, two of the major considerations regarding reformers are thermal efficiency and size.

A potential source of heat for the highly endothermic reformation reaction is the heated product has which exits from the catalyst material within the reaction section of the reformer and must be cooled before the shift reaction will be favored. By using a double counter-current design reformer, this hot reformed gas is passed in heat exchange relation with the reaction section and the reformer catalyst material contained therein, with the double benefit of transferring heat needed to start and maintain the reformation reaction into the reaction section while reducing the temperature of the reformed gas for shift reaction purposes. This design also results in a slight reduction in equipment size by merging the product gas cooler with the reformer. However, further thermal efficiency increases and equipment size reductions are possible and desirable.

Accordingly, the present invention resides in an for producing from hydrocarbon feedstock a gaseous mixture principally comprising hydrogen, characterized in that said apparatus comprises: elongated combustion chamber means for reacting fuel and oxidant therein to generate heat for heating said hydrocarbon feedstock and for supporting a hydrogen-producing reaction; reformation reaction chamber means retaining reformer catalyst material therein and being formed about said combustion chamber means in heat exchange relationship with the latter and having an outer boundary comprising a wall; shift reaction chamber means containing shift catalyst material and being formed about said reformation reaction chamber means in heat exchange relationship with the latter and having an inner boundary comprising at least a portion of said wall, an end portion of said shift reaction chamber means and an end portion of said reformation reaction chamber means being in gaseous flow communication; preheated gas flow-producing means for producing a preheated gaseous flow of hydrocarbon feedstock and steam in a first direction through said reformation reaction chamber means wherein said hydrocarbon feedstock and steam are reacted in the presence of heat and said reformer catalyst material to form a high temperature mixture comprising hydrogen, carbon monoxide, carbon dioxide, and residual steam which, upon passing from said reformation reaction chamber means, is then flowed into said shift reaction chamber means in a second direction opposite to said first direction, said shift catalyst material acting to increase the local heat transfer coefficient within said shift reaction chamber means for causing more heat from said high temperature mixture to be transferred through said wall from said shift reaction chamber means to said reformation reaction chamber means, the increased transfer of heat acting to reduce the amount of heat which must be generated within said combustion chamber to support said hydrogen-producing reaction and also to more rapidly reduce the temperature of said high temperature mixture into a lower temperature range to permit the mixture to react within said shift reaction chamber in the presence of said shift catalyst material to produce heat and form a mixture comprising carbon dioxide and additional hydrogen from said carbon monoxide and residual steam; at least a portion of said product heat being transferred through said wall into said reformation reaction chamber means to reduce the amount of heat which must be generated within

said combustion chamber means for heating said hydrocarbon feedstook and for supporting said hydrogen-producing reaction; and an additional shift reaction device into which the resulting gaseous products are then flowed to substantially complete the conversion of residual carbon monoxide to carbon dioxide.

In order that the invention can be more clearly understood, a convenient embodiment thereof will now be described, by way of example, with reference to the accompanying drawings in which:

Figure 1 is a sectional elevation of a prior art fuel reformer of the double counter-current flow type; and

Figure 2 is a sectional elevation of a double counter-current flow fuel reformer with an integrated shift reactor and incorporating a combustion catalyst.

Referring now to Figure 1, there is shown a double counter-current flow reformer 10 constructed in accordance with the prior art. In general, reformer 10 is comprised of combustion chamber 12, reaction chamber 14, and product chamber 16. Combustion chamber 12 is bounded by wall 18 and wall 20 and houses combustor 22 and exhaust 24. A fuel is supplied to combustor 22 through fuel supply line 26. An oxidant gas is introduced into combustion chamber 12 through oxidant supply line 28. The lower portion of combustion chamber 12 is protected by a lining of firebricks 30. Combustion products from combustor 22 flow upwardly as shown by arrow 32 and are discharged through exhaust 24. Reaction chamber 14 is formed about combustion chamber 12 between wall 34, and wall 18, which is shared with combustion chamber 12 and causes reaction chamber 14 to be in heat exchange relation with combustion chamber 12. Catalyst support 36 retains reformer catalyst material 38 within reaction chamber 14. Product chamber 16, is formed about reaction chamber 14 between wall 40, and wall 34. Wall 34 is shared with reaction chamber 14 and causes product chamber 16 to be in heat exchange relation with reaction chamber 14. Connecting passageway 42 causes product chamber 16 to be in gaseous flow communication with reaction chamber 14. Process gas supply line 44 is used to introduce process gas into reaction chamber 14 and product gas outlet line 52 removes product gas from product chamber 16 and transports it to external shift reactor 53.

In operation of the prior art reformer, a fuel is supplied to combustor 22 through fuel supply line 26 and an oxidant gas is supplied through oxidant supply line 28. Following ignition in combustor 22, the combustion products flow upwardly as shown by arrow 32, heating reaction chamber 14 and reformer catalyst material 38 retained therein through common wall 18. The combustion products exit combustion chamber 12 through exhaust 24.

A process gas to be reformed, such as a desulphurized and preheated hydrocarbon mixed with steam, enters reaction chamber 14 through process gas supply line 44. The direction of flow of the process gas, as indicated by arrow 46, is counter to the direction of flow of the combustion products, as shown by arrow 32. The downwardly flowing process gas passes through reaction chamber 14 and reformer catalyst material 38 contained therein, then passes through passageway 42 before reversing direction at arrow 48 and entering product chamber 16. The reformed process gas or product gas then flows upwardly in the direction of arrow 50, which is counter to the direction of flow of the process gas through reaction chamber 14 as indicated by arrow 46, until it is discharged through product gas outlet line 52 into external shift reactor 53. As a result of the flow direction reversals, the reformer is characterized as a "double counter-current flow" reformer.

The process gas, comprised of a desulphurized hydrocarbon and steam, is reacted within reaction chamber 14 in the presence of heat and a catalyst, forming a mixture of hydrogen gas, carbon dioxide, carbon monoxide and residual steam. The reactions for one hydrocarbon, methane, are given below:

$$CH_4 + 2H_2O \xrightarrow{\text{heat}} CO_2 + 4H_2$$

$$CH_4 + H_2O \xrightarrow{\text{heat}} CO + 3H_2$$

Heat for the reactions is generated by combustor 22 within combustion chamber 12 and is transferred into reaction chamber 14 and reformer catalyst material 38 through shared wall 18. The reformed product gas exits reformer catalyst material 38 through porous catalyst support 36 at a temperature of about 649 - 816 °C (1200-1500 °F). By passing this hot product gas through product chamber 16 in heat exchange relation with reaction chamber 14, about 10-25% of the heat duty for the reformation reaction can be extracted from the product gas. This heat transfer to reaction chamber 14 also aids in the necessary reduction in the product gas temperature prior to the introduction of the product gas into shift reactor 53, where the undesirable carbon monoxide is reacted with steam to produce carbon dioxide and hydrogen.

However, no reactions occur in product chamber 16 nor is any further fuel processing performed therein.

In accordance with the present invention, additional fuel processing as well as thermal and spatial efficiency improvements can be obtained from the same size reformer by packing product chamber 16 with water/gas shift catalyst material, transforming product chamber 16 into a second reaction chamber. Fuel efficiency is improved through the use of a combustion catalyst rather than a burner assembly, such as combustor 22.

Referring now to Figure 2, there is shown a reformer/shift reactor 54 which comprises combustion chamber means 56, reformation reaction chamber means 58 and shift reaction chamber means 60. Combustion chamber 56 is formed by first wall 62 and is comprised of premixer section 64, combustion catalyst region means 66, and exhaust means 68. Typically, an oxidation or combustion catalyst material 70, such as a noble metal (preferably platinum, palladium, or rhodium) on an alumina substrate, is supported within combustion chamber 56 by combustion catalyst material retaining means 72, preferably of mesh material such as stainless steel or "Inconel". A fuel, preferably spent anode gas for a reformer in a phosphoric acid fuel cell system, is supplied to combustion chamber 56 through fuel supply means, such as fuel supply line 74. An oxidant, preferably spent cathode gas in a phosphoric acid based fuel cell system, is supplied to combustion chamber 56 through oxidant supply means, such as oxidant supply line 76. Reformation reaction chamber 58 is formed about combustion chamber 56 between second wall 78, and first wall 62. Wall 62 is shared between reformation reaction chamber 58 and combustion chamber 56 and causes reformation reaction chamber 58 to be in heat exchange relation with combustion chamber 56. Reformer catalyst material 80, preferably a nickel compound and/or a noble metal, such as platinum, palladium, or rhodium, on an alumina substrate, usually in pellet form, is supported within reformation reaction chamber 58 by reformer catalyst support 82, which may be stainless steel mesh. Shift reaction chamber 60 is formed between third wall 84, and second wall 78, which is shared with reformation reaction chamber 58 in such a way that gaseous fluid can pass from reformation reaction chamber 58 into shift reaction chamber 60 through connecting passageway 86 around wall 78 and heat can be transferred from shift reaction chamber 60 into reformation reaction chamber 58 through shared wall 78. Shift catalyst material 90, preferably iron/chromium or chromium material, is packed into shift reaction chamber 60. Wall 84 is insulated from heat loss by conventional methods, which may take the form of an insulation coating 88.

During operation of reformer/shift reactor 54, a fuel, preferably spent anode gas for a reformer in a fuel cell system employing a phosphoric acid electrolyte, is introduced into combustion chamber 56 through fuel supply line 74. Oxidant, preferably spent cathode gas for a phosphoric acid fuel cell system, is introduced into combustion chamber 56 through oxidant supply line 76. In the preferred embodiment, the gases rise generally in the direction of arrow 92 through premixer section 64 and into catalyst section 66 where ignition of the fuel occurs. The use of an oxidation or combustion catalyst 70, such as "DuPont Platinum Black", made by the DuPont Chemical Company, allows combustion of the fuel to take place at a much lower temperature and over a longer axial distance than with a conventional burner assembly while providing substantially the same amount of heat as required by a state of the art reformer. The distribution of the combustion reaction also eliminates the need for firebricks within combustion chamber 56. The products from the combustion process are discharged from the reformer at exhaust 68 and may be used to supply heat for other processes such as steam generation or product gas preheating.

Typical temperatures in this reformer at various identified points are as set forth below:

| LEVEL IN CHAMBERS | COMBUSTION GAS TEMPERATURE | PROCESS GAS TEMPERATURE | PRODUCT GAS TEMPERATURE |
|---|---|---|---|
| | (within Combustion Chamber) | (Within Reformation Reaction Chamber) | (Within Shift Reaction Chamber) |
| A | 800-1100°F (427-693°C) | 400-800°F (204-427°C) | 800-1200°F (427-593°C) |
| B | 1500-1700°F (816-927°C) | 1200-1400°F (649-760°C) | 1000-1400°F (538-760°C) |
| C | 1200-1500°F (649-816°C) | 1200-1500°F (649-816C) | 1200-1500°F (649-816°C) |

The maximum temperature experienced by wall 62 of combustion chamber 56 is at point C and is in the neighborhood of 1500° F. Since this temperature is sufficiently below the maximum working temperature for most metals that would be preferred for reformer use, no refractory lining is required within combustion chamber 56.

Hydrocarbon feedstock, preferably methane in most cases although light naptha, methanol, or other hydrocarbons can be used, is first desulpherized in order to extend the useful life of reformer catalyst materials. The selected hydrocarbon is then preheated to 400 to 800° F (204 to 427° C) in conventional preheater 93, vaporizing hydrocarbons which are liquid at room temperature. A process gas, which is produced by mixing the desulpherized and preheated hydrocarbon vapor with steam, is introduced into reformation reaction chamber 58 through process gas supply line 94. The process gas is forced in a first direction, which may be downwardly as indicated by arrow 96, through reformer catalyst material 80 contained in reformation reaction chamber 58 by reformable gas flow-producing means, such as a pump 97 or other pressurization means. Preferred reformer catalyst materials, which employ an alumina substrate, are nickel and/or noble metals, particularly platinum, palladium or rhodium. Within reformer catalyst material 80 inside of reformation reaction chamber 58, the hydrocarbon and steam react in the presence of heat and the catalyst to form carbon dioxide, carbon monoxide, and hydrogen gas. The reactions for one hydrocarbon, methane, are given below:

$$CH_4 + 2H_2O \xrightarrow{\text{heat}} CO_2 + 4H_2$$

$$CH_4 + H_2O \xrightarrow{\text{heat}} CO + 3H_2$$

The products of these reactions, carbon dioxide, carbon monoxide and hydrogen, can be fed directly into solid oxide fuel cells as a fuel. However, the reformed process gas or product gas contains about 9-10% carbon monoxide. Since carbon monoxide in levels above ~1% is harmful to pressurized fuel cells employing a phosphoric acid electrolyte, further fuel conditioning is required before the product gas can be used as a fuel in such phosphoric acid fuel cells.

This additional fuel conditioning usually takes place in an external shift reactor. While the optimum temperature for the shift reaction is dependent upon the catalyst chosen, the shift reaction is generally favored at lower temperatures than the reformation reaction. Therefore, the product gas must be cooled from its temperature upon exiting the reformer catalyst material 80 of about 649-816° C (1200-1500° F) regardless of which catalyst is chosen. However, in most cases a high temperature shift catalyst is used with iron/chromium and chromium being preferred, resulting in an optimum shift reaction temperature range of 371-482° C 700-900° F.

Product annulus 16 of the prior art reformer 10 shown in Figure 1 is packed with high temperature shift catalyst material 90 as shown in Figure 2, creating shift reaction chamber 60. Reformable gas flow-producing means, such as pressurization from a tank (not shown) or a pump 97, causes the product gas to exit reformer catalyst material 80 contained within reformation reaction chamber 58, pass into shift catalyst material 90 within shift reaction chamber 60, pass through passageway 86 around wall 78, and turn in a second direction substantially parallel and counter directional to said first direction, which may be upwardly as indicated by arrow 98. Shift catalyst material 90 is similar to reformer catalyst material 80, promoting residual hydrocarbon reformation in the sections of shift reaction chamber 60 in which the temperature is sufficient (above 538° C (1000° F)). Shift catalyst material 90 also serves as an excellent heat transfer material with the heat removed from the product gas passing through wall 78 into reformation reaction chamber 58, where it is needed for the endothermic reformation reaction. The transfer of heat from shift reaction chamber 60 into reformation reaction chamber 58 is greatest in the region about Point A, where the temperature differential between the product gas and process gas is the highest. As hereinbefore indicated in chart form, the product gas temperature at Point A is about 427-649° C (800-1200° F) while that of the process gas is only about 204-427° C (400-800° F). However, heat is also transferred through wall 78 about Points B and C to the portions of reformation reaction chamber 58 in which the highly endothermic reformation reaction is absorbing heat.

Within the final one-half to one-third portion of shift reaction chamber 60, represented by Level A and

part of Level B in Figure 2, the product gas temperature will have dropped sufficiently that the water/gas shift reaction will be favored. The reaction is generally as follows:

$$CO + H_2O \rightarrow CO_2 + H_2 + heat$$

This reaction, which is slightly exothermic, results in additional hydrogen generation, reduces the level of undesirable carbon monoxide, and introduces carbon dioxide, which is not harmful to phosphoric acid fuel cells. Since the entire shift reaction cannot be performed in shift reaction chamber 60 due to spatial considerations, the reformed and partially shift reacted gas exits shift reaction chamber 60 through product gas exit line 100 as shown by arrow 102 and proceeds into external shift reaction device 104 for final reduction of the carbon monoxide to acceptable levels.

The thermal efficiency of reformer/shift reactor 54 is superior to that of the prior art reformer in several ways. Use of a combustion catalyst enhances fuel efficiency over use of a conventional burner assembly by dispersing the combustion reaction about reformation reaction chamber 58 where heat is required to support the reformation reaction. Shift catalyst material 90 serves to increase the local heat transfer coefficient of shift reaction chamber 60 over that of product chamber 16 of prior art reformer 10 depicted in Figure 1, reducing the amount of heat required from fuel combustion. This more efficient heat transfer also serves to more rapidly reduce the product gas temperature into the temperature range in which the shift reaction is favored. The heat generated by the slightly exothermic shift reaction is also transferred through wall 78 into reformation reaction chamber 58 and accounts for about 2%-5% of the reformer heat duty, further reducing the amount of heat required from combustion.

Although the entire shift reaction cannot be performed within shift reaction chamber 60, a sufficient portion of the reaction can be achieved therein that the size of external shift reaction device 104 can be substantially reduced. Since about 30-40% of the shift reaction is accomplished within shift reaction chamber 60, the external shift reactor can be correspondingly reduced in size.

The invention can be used in tubular as well as slab or other type reformers with slab reformers favored for low pressure reforming operations (1-5 amtospheres (101-506 KPa)). Tubular designs are preferred for high pressure processes, usually on the order of 5-20 atmospheres (506-2025 KPa).

## Claims

1. Apparatus for producing from hydrocarbon feedstock a gaseous mixture principally comprising hydrogen, characterized in that said apparatus comprises: elongated combustion chamber means for reacting fuel and oxidant therein to generate heat for heating said hydrocarbon feedstock and for supporting a hydrogen-producing reaction; reformation reaction chamber means retaining reformer catalyst material therein and being formed about said combustion chamber means in heat exchange relationship with the latter and having an outer boundary comprising a wall; shift reaction chamber means containing shift catalyst material and being formed about said reformation reaction chamber means in heat exchange relationship with the latter and having an inner boundary comprising at least a portion of said wall, an end portion of said shift reaction chamber means and an end portion of said reformation reaction chamber means being in gaseous flow communication; preheated gas flow-producing means for producing a preheated gaseous flow of hydrocarbon feedstock and steam in a first direction through said reformation reaction chamber means wherein said hydrocarbon feedstock and steam are reacted in the presence of heat and said reformer catalyst material to form a high temperature mixture comprising hydrogen, carbon monoxide, carbon dioxide, and residual steam which, upon passing from said reformation reaction chamber means, is then flowed into said shift reaction chamber means in a second direction opposite to said first direction, said shift catalyst material acting to increase the local heat transfer coefficient within said shift reaction chamber means for causing more heat from said high temperature mixture to be transferred through said wall from said shift reaction chamber means to said reformation reaction chamber means, the increased transfer of heat acting to reduce the amount of heat which must be generated within said combustion chamber to support said hydrogen-producing reaction and also to more rapidly reduce the temperature of said high temperature mixture into a lower temperature range to permit the mixture to react within said shift reaction chamber in the presence of said shift catalyst material to produce heat and form a mixture comprising carbon dioxide and additional hydrogen from said carbon monoxide and residual steam; at least a portion of said product heat being transferred through said wall into said reformation reaction chamber means to reduce the amount of heat which must be generated within said combustion chamber means for heating said hydrocarbon feedstock and for supporting said hydrogen-producing reaction; and an

additional shift reaction device into which the resulting gaseous products are then flowed to substantially complete the conversion of residual carbon monoxide to carbon dioxide.

2. An apparatus according to claim 1, characterized in that the combustion chamber means comprises combustion catalyst material retained by combustion catalyst material retaining means within combustion catalyst region means wherein fuel introduced into said combustion chamber means through fuel supply means and mixed with oxidant introduced through oxidant supply means is ignited, said combusion catalyst region means of said combustion chamber means being in heat exchange relationship with at least a portion of said reformation reaction chamber means ofr transferring at least a portion of the heat resulting from the ignition of said fuel into said reformation reaction chamber means and the reformer catalyst material therein retained.

3. An apparatus according to claim 2, characterized in that the fuel comprises spent anode gas from a phosphoric acid fuel cell system and hte oxidant gas comprises spent cathode gas from a phosphoric acid fuel cell system.

**Revendications**

1. Appareil destiné à produire à partir d'une charge d'alimentation hydrocarbonée un mélange gazeux comprenant principalement de l'hydrogène, caractérisé en ce que ledit appareil comprend: des moyens formant chambre de combustion allongée servant à faire réagir dans leur intérieur du combustible et de l'oxydant afin d'engendrer de la chaleur pour réchauffer ladite charge d'alimentation hydrocarbonée et pour supporter une réaction productrice d'hydrogène; des moyens formant chambre de réaction de reformage retenant dans leur intérieur une matière de catalyse de reformage et formés autour desdits moyens formant chambre de combustion suivant une relation d'échange de chaleur avec ces derniers et présentant une limite externe comprenant une paroi; des moyens formant chambre de réaction de conversion renfermant une matière de catalyse de conversion et formés autour desdits moyens formant chambre de réaction de reformage suivant une relation d'échange de chaleur avec ces derniers et présentant une limite interne comprenant au moins une partie de ladite paroi, une partie d'extrémité desdits moyens formant chambre de réaction de conversion et une partie d'extrémité desdits moyens formant chambre de réaction de reformage étant en communication de flux gazeux; des moyens producteurs de flux de gaz préchauffé servant à produire un flux gazeux préchauffé de charge d'alimentation hydrocarbonée et de vapeur d'eau dans une première direction à travers lesdits moyens formant chambre de réaction de reformage dans lesquels ladite charge d'alimentation hydrocarbonée et ladite vapeur d'eau sont soumis à une réaction en présence de chaleur et de ladite matière de catalyse de reformage pour former un mélange à température élevée comportant de l'hydrogène, du monoxyde de carbone, du dioxyde de carbone et de la vapeur d'eau résiduelle, qui, à sa sortie desdits moyens formant chambre de réaction de reformage, est alors introduit dans lesdits moyens formant chambre de réaction de conversion dans une seconde direction opposée à ladite première direction, l'action de ladite matière de catalyse de conversion ayant pour effet d'augmenter le coefficient de transfert de chaleur local à l'intérieur desdits moyens formant chambre de réaction de conversion pour provoquer le transfert d'une plus grande quantité de chaleur en provenance dudit mélange à température élevée à travers ladite paroi depuis lesdits moyens formant chambre de réaction de conversion jusqu'aux moyens formant chambre de réaction de reformage, le transfert accru de chaleur ayant pour effet de réduire la quantité de chaleur qui doit être engendrée à l'intérieur de ladite chambre de combustion pour supporter ladite réaction productrice d'hydrogène, ainsi que de réduire plus rapidement la température dudit mélange à température élevée jusqu'à une gamme de températures plus faibles pour permettre au mélange de réagir à l'intérieur de ladite chambre de réaction de conversion en présence de ladite matière de catalyse de conversion pour produire de la chaleur et former un mélange comportant du dioxyde de carbone et de l'hydrogène additionnel à partir dudit flux de monoxyde de carbone et de vapeur d'eau résiduelle; au moins une partie de ladite chaleur du produit étant transférée à travers ladite paroi dans lesdits moyens formant chambre de réaction de reformage pour réduire la quantité de chaleur qui doit être engendrée à l'intérieur desdits moyens formant chambre de combustion pour chauffer ladite charge d'alimentation hydrocarbonée et pour supporter ladite réaction productrice d'hydrogène; et un dispositif additionnel de réaction de conversion dans lequel les produits gazeux résultants sont ensuite acheminés pour achever sensiblement la conversion du monoxyde de carbone résiduel en dioxyde de carbone.

2. Appareil selon la revendication 1, caractérisé en ce que les moyens formant chambre de combustion comprennent une matière de catalyse de combustion retenue par des moyens de retenue de matière de catalyse de combustion à l'intérieur de moyens formant région de catalyse de combustion, dans lequel du combustible, introduit dans lesdits moyens formant chambre de combustion par l'intermédiaire de moyens d'alimentation en combustible et mélangé avec de l'oxydant introduit par l'intermédiaire de moyens d'alimentation en oxydant, est allumé, lesdits moyens formant région de catalyse de combustion desdits moyens formant chambre de combustion étant en relation d'échange de chaleur avec au moins une partie desdits moyens formant chambre de réaction de reformage pour transférer au moins une partie de la chaleur résultant de l'allumage dudit combustible dans lesdits moyens formant chambre de réaction de reformage et dans la matière de catalyse de reformage qu'ils retiennent.

3. Appareil selon la revendication 2, caractérisé en ce que le combustible comprend du gaz d'anode épuisé en provenance d'un système de pile à combustible à acide phosphorique et en ce que le gaz oxydant comprend du gaz de cathode épuisé en provenance d'un système de pile à combustible à acide phosphorique.

**Patentansprüche**

1. Apparat zur Erzeugung einer gasförmigen Mischung, die prinzipiell Wasserstoff umfaßt, aus einem Kohlenwasserstoffausgangsmaterial, dadurch gekennzeichnet, daß der Apparat folgendes umfaßt: langgestreckte Verbrennungskammereinrichtung zur Reaktion von Brennstoff und Oxidationsmittel darin, um Wärme zur Erhitzung des Kohlenwasserstoffausgangsmaterials und zur Unterstützung einer wasserstofferengenden Reaktion zu erzeugen; Reformationsreaktionskammereinrichtungen zur Rückhaltung von Reformations-Katalysator-Material darin, welche um die Verbrennungskammereinrichtungen herum in Wärmeaustauschbeziehung mit den letzteren gebildet sind und die eine äußere Umgrenzung aufweisen, die eine Wand umfaßt; Verschiebereaktionskammereinrichtungen, die Verschiebe-Katalysator-Material enthalten und um die Reformationsreaktionskammereinrichtungen herum in Wärmeaustauschbeziehung mit den letzteren angeordnet sind und eine innere Begrenzung aufweisen, die zumindest einen Teil der Wand umfaßt, wobei ein Endteil der Verschiebereaktionskammereinrichtungen und ein Endteil der Reformationsreaktionskammereinrichtungen in Gasdurchströmungskommunikation stehen; Erzeugungseinrichtungen für vorerhitzte Gasstörmung zur Erzeugung eines vorerhitzten Gasstromes aus Kohlenwasserstoffausgangsmaterial und Dampf in einer ersten Richtung durch die Reformationsreaktionskammereinrichtungen, wobei das Kohlenwasserstoffausgangsmaterial und der Dampf in Anwesenheit von Hitze und dem genannten Reformations-Katalysator-Material reagiert wird, um eine Mischung hoher Temperatur zu bilden, die Wasserstoff, Kohlenmonoxyd, Kohlendioxyd und Restdampf umfaßt, welche Mischung nach dem Passieren aus den Reformationsreaktionskammereinrichtungen dann in die Verschiebereaktionskammereinrichtungen in einer zweiten Richtung geführt wird, die entgegengesetzt ist zu der genannten ersten Richtung, wobei das Verschiebe-Katalysator-Material eine Erhöhung des örtlichen Wärmetransferkoeffizienten innerhalb der Verschiebereaktionskammereinrichtungen bewirkt, um zu veranlassen, daß mehr Hitze der Hochtemperaturmischung von den Verschiebereaktionskammereinrichtungen durch die Wand hindurch zu den Reformationsreaktionskammereinrichtungen übertragen wird, wobei die erhöhte Wärmeübertragung bewirkt, daß die Wärmemenge reduziert wird, die innerhalb der Verbrennungskammer erzeugt wird, um die wasserstofferzeugende Reaktion zu unterstützen, und auch, um schneller die Temperatur der Hochtemperaturmischung zu einem niedrigeren Temperaturbereich zu reduzieren, um der Mischung zu ermöglichen, innerhalb der Verschiebereaktionskammer in der Anwesenheit des Verschiebe-Katalysator-Materials zu reagieren, um Wärme zu erzeugen und aus dem Kohenmonoxyd und dem Restdampf eine Mischung zu bilden, die Kohlendioxyd und zusätzlichen Wasserstoff enthält; wobei zumindest ein Teil der Produkthitze durch die Wand in die Reformationsreaktionskammereinrichtungen übertragen wird, um die Menge an Wärme zu reduzieren, die innerhalb der Verbrennungskammereinrichtungen erzeugt werden muß, um das Kohlenwasserstoffausgangsmaterial zu erhitzen und um die wasserstofferzeugende Reaktion zu unterstützen; und eine zusätzliche Verschiebereaktionseinrichtung, in die dann die sich ergebenden gasförmigen Produkte geleitet werden, um die Konversion von Restkohlenmonoxyd zu Kohlendioxyd im wesentlichen abzuschließen.

2. Ein Apparat nach Anspruch 1, dadurch gekennzeichnet, daß die Verbrennungskammereinrichtungen Verbrennungs-Katalysator-Material umfassen, das durch Verbrennungs-Katalysator-Material-Rückhalteeinrichtungen innerhalb von Verbrennungs-Katalysator-Bereichseinrichtungen gehalten wird, wobei Brennstoff, der in die Verbrennungskammereinrichtungen durch Brennstoffversorgungseinrichtungen eingeführt und mit Oxydationsmittel, das durch Oxydationsversorgungseinrichtungen eingeführt wird, vermischt wurde, entzündet wird, wobei die Verbrennungs-Katalysator-Bereichseinrichtungen der Verbrennungskammereinrichtungen sich in Wärmeaustauschbeziehung mit zumindest einem Teil der Reformationsreaktionskammereinrichtungen befinden, um zumindest einen Teil der sich aus der Entzündung des Brennstoffes ergebende Wärme in die Reformationsreaktionskammereinrichtungen und das darin gehaltene Reformations-Katalysator-Material zu übertragen.

3. Ein Apparat nach Anspruch 2, dadurch gekennzeichnet, daß der Brennstoff verbrauchtes Anodengas aus einem Phosphorsäurebrennstoffzellensystem umfaßt, und daß das Oxydationsmittelgas verbrauchtes Katodengas eines Phosphorsäurebrennstoffzellensystems umfaßt.

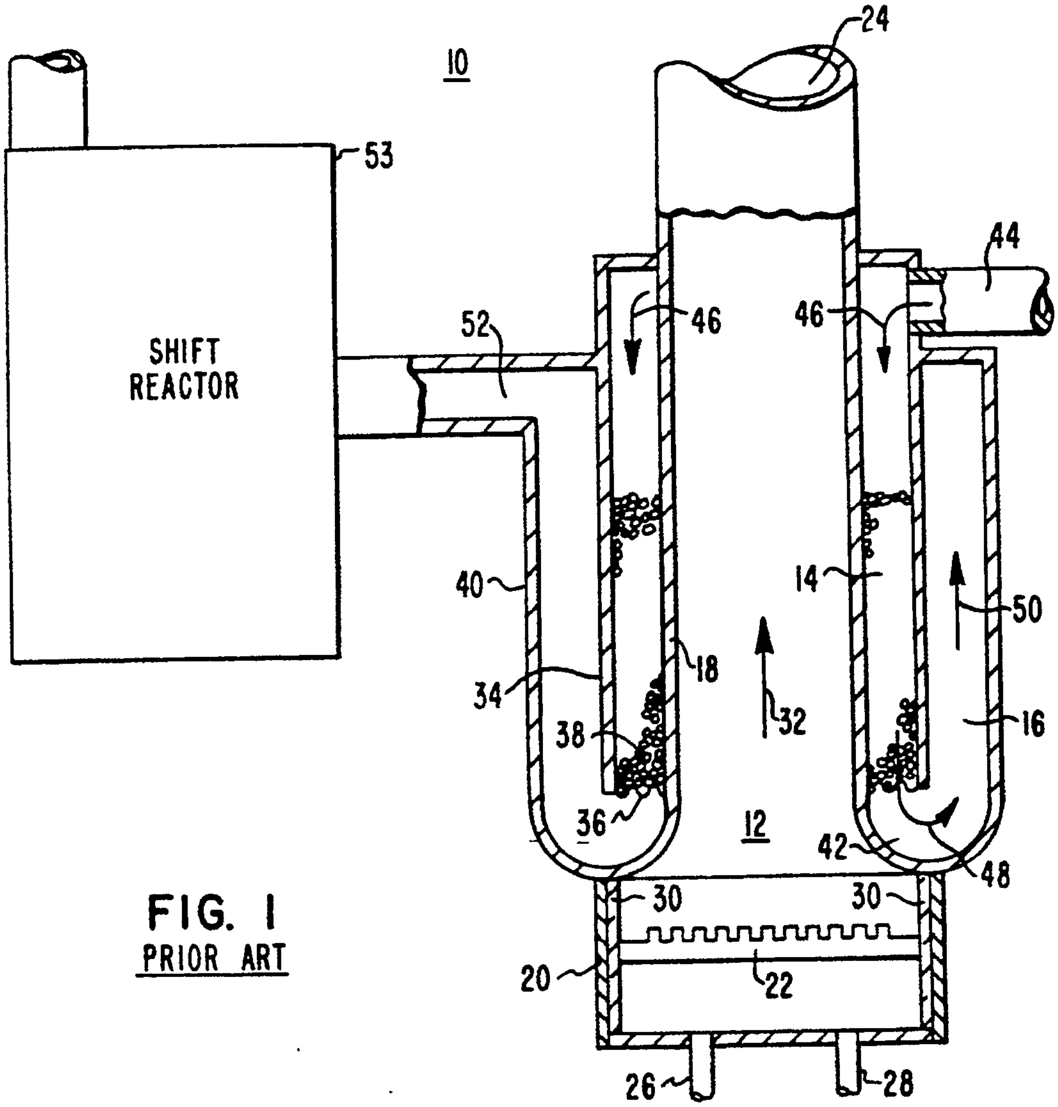


FIG. I
PRIOR ART

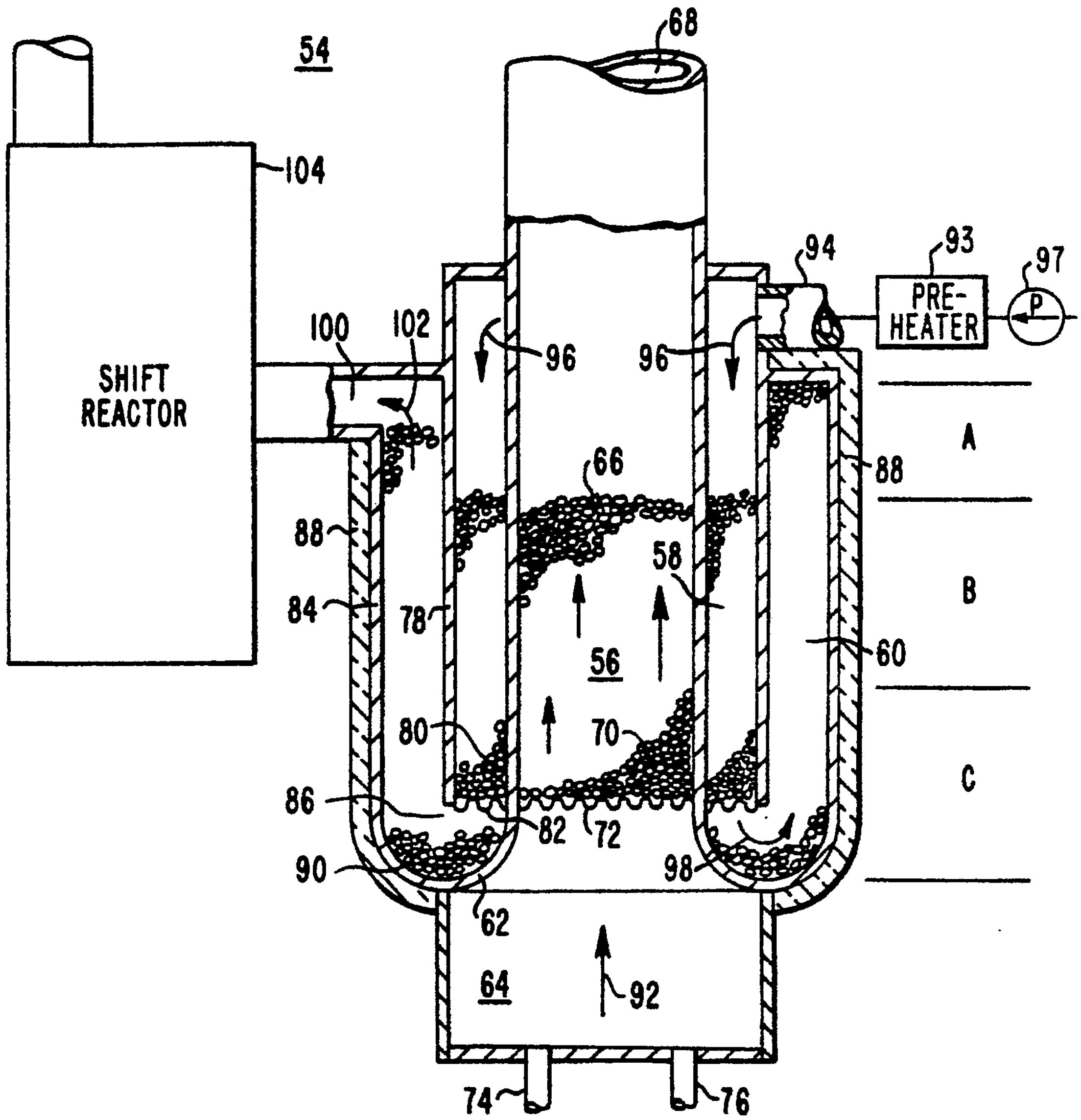
54
68
SHIFT
REACTOR
104
94
93
97
PRE-
HEATER
P
100
102
96
96
66
A
88
88
58
B
84
78
56
60
80
70
C
86
82
72
90
98
62
64
92
74
76

FIG. 2